# EUROPEAN PATENT APPLICATION

(11) **EP 4 044 387 A1**
(43) Date of publication of application: **17.08.2022**
(21) Application number: 21157194.8
(22) Date of filing: 15.02.2021
(51) Int. Cl.: H02J 3/16, H02J 3/18, H02J 3/38, H02J 3/50, F03D 7/02, F03D 7/04, H02J 3/30, F03D 9/12

(54) **WIND TURBINE FARM AND METHOD FOR OPERATING**

(71) Applicant: Siemens Gamesa Renewable Energy A/S, 7330 Brande (DK)
(72) Inventor: NICKELSEN, Peder Riis, 7480 Vildbjerg (DK); STIESDAL, Henrik, 5000 Odense C, (DK); THISTED, Jan, 8830 Tjele (DK)
(74) Representative: Aspacher, Karl-Georg

(57) **Abstract**

A wind turbine farm for exchanging a total reactive power with the grid is provided. The wind farm comprises a plurality of wind turbines configured to exchange aggregate WT-reactive power with the grid, a synchronous condenser configured to exchange SC-reactive power with the grid and at least one controller. The plurality of wind turbines are connected to a common connection point, the common connection point being coupled to the grid. The synchronous condenser is connected to the common connection point. The at least one controller is configured to control the operation of the plurality of wind turbines and of the synchronous condenser. The total reactive power to be exchanged comprises a percentage of SC-reactive power and a percentage of aggregate WT-reactive power. A method and a computer program are also provided.

## Description

### Field of invention

The present invention relates to wind turbine farms and methods, more specifically to wind turbine farms and methods to exchange reactive power with the grid.

### Background of the invention

Wind turbines generators have for long been connected to electrical systems, e.g. an electric grid, and so required to comply the standards and codes imposed by the electrical grid operators.

Likewise a plurality of wind turbine generators may be aggregated or connected in wind turbine farms. A wind turbine farm is also referred to as a wind farm or a wind park. Such connection of a wind turbine generator to an electrical system also needs to comply to specific requirements or standards.

There is a need to generally improve utilisation of wind turbine generators and farms, to improve their interaction with the grid and also reduce the manufacturing and/or maintenance costs.

### Summary of the invention

In a first aspect a wind turbine farm for exchanging a total reactive power with the grid is provided. The wind farm comprises a plurality of wind turbines configured to exchange aggregate WT-reactive power with the grid, a synchronous condenser configured to exchange SC-reactive power with the grid and at least one controller. The plurality of wind turbines are connected to a common connection point, the common connection point being coupled to the grid. The synchronous condenser is connected to the common connection point. The at least one controller is configured to control the operation of the plurality of wind turbines and of the synchronous condenser. The total reactive power to be exchanged comprises a percentage of SC-reactive power and a percentage of aggregate WT-reactive power.

The synchronous condenser may provide a percentage of the required reactive power and thus, the plurality of wind turbines are not required to be dimensioned for exchanging huge amount of reactive power. That is, e.g. the size of the inverter (or of the converter), of the transformer, etc.; of the wind turbines may not need to be oversized or not need to be that much oversized if compared with examples lacking a synchronous condenser. Manufacturing and/or maintenance costs of the wind farm may therefore be substantially reduced.

Moreover, the amount of material required for manufacturing the cabling system of the wind farm may also be significantly reduced. A 14 MW wind turbine farm may require: a maximum of 5 wind turbines coupled per cable string having 800 square millimetres, 66kV copper feeder cables. By adding a synchronous condenser, the current required may be reduced (if compared to wind farms lacking a synchronous condenser). Thus, at least a further wind turbine i.e. a total of 6 wind turbines may be coupled per feeder cable. Increasing the number of wind turbines per string may decrease the total number of strings need in the wind farms. Thereby an upside for cost of cables, installation and losses may be achieved.

In an example, the percentage of aggregate WT-reactive power to be exchanged may be zero. The total reactive power may be thus exchanged by the synchronous condenser.

In an example, the percentage of aggregate WT-reactive power to be exchanged may be non-zero.

In an example, the wind turbine farm may further comprise a measuring device configured to measure parameters e.g. grid parameters and/or wind turbine farm parameters, at the common connection point.

In an example, the parameters measured by the measuring device may be voltage, active power, reactive power, frequency or any other suitable parameter of the wind turbine farm and/or of the grid.

In an example, the total reactive power to be exchanged may depend on a measured grid parameter. Thus, the total reactive power may be adapted to the on-going grid requirements, which provides an efficient and adaptative wind turbine farm.

In an example, the synchronous condenser may comprise a flywheel. The flywheel further enables providing support to the grid with a frequency inertia response and a voltage support during an event, e.g. a voltage drop, and during a recovery period. The flywheel may provide further inertia response by the kinetic energy stored in the rotating mass of the rotor of the synchronous condenser. Adding a mass to the rotor may further enhance the grid support by providing more inertia to the power grid, which may also be beneficial during grid faults as the flywheel may support the recovery of the grid after e.g. a voltage drop.

In a further aspect, a method for operating a wind turbine farm according to any of the disclosed examples is provided. Firstly, the total reactive power value of the wind farm to be exchanged with the grid is determined by the at least one controller. Then, a total reactive power is exchanged with the grid, instructed by the at least one controller and based on the reactive power value. Wherein the total reactive power to be exchanged comprises a percentage of SC-reactive power and a percentage of aggregate WT-reactive power.

Being able to exchange a percentage of the total reactive power by the synchronous condenser, enables reducing the percentage exchanged by the plurality of wind turbines as the total reactive power amount is shared between the synchronous condenser and the plurality of wind turbines. This involves that the reactive power to be exchanged by the plurality of wind turbines, is lower than in wind farms without a synchronous condenser. The dimensioning of the plurality of wind turbines and/or some of their elements may not need to be oversized up to the extent of other wind farms without synchronous condenser which enables reducing the manufacturing and/or maintenance costs of the plurality of wind turbines.

For example, a wind turbine comprising a nominal power of about 14MW e.g obtained in the range of wind speed from about 13 m/s to about 25 m/s) may be allowed to operate at about 10% - 12% higher nominal power, i.e. at about 15.4 MW. That is, a higher amount of active power may be delivered to the grid by the wind turbine.

Furthermore, the by having a synchronous condenser an improved voltage regulation may be obtained.

Moreover, in the event of a relatively short period of time in which the electrical system, e.g. the grid, requires a certain amount of reactive power, the use of the synchronous condenser is further advantageous due to the overload or excess capacity of electrical current supply. This may provide better support to the grid e.g. to compensate the grid in case of a grid fault.

Yet further advantages include the provision of rotating inertial and thus frequency regulating options. This may also include reducing or eliminating requirements of electronics or dedicated circuits to handle voltage events on the grid, such as low voltage or zero voltage rides through capabilities.

In an example, the method may further comprise measuring a parameter, e.g. voltage, amplitude, frequency, active power, reactive power, etc; at the common connection point and comparing the measured parameter with a reference parameter value. If the measured parameter e.g. voltage, frequency, reactive power, active power, etc., is different from the reference parameter, the reactive power to be exchanged between the wind farm and the grid may be adjusted. The grid may therefore be neutralized.

The measured parameter may be either a wind farm parameter e.g. the power factor, or a grid parameter, e.g. grid voltage.

For instance, the measured parameter may be grid voltage. The reference parameter value i.e. the reference grid voltage, may be e.g. about 66kV. If the measured grid voltage at the common connection point is lower than the reference value, the grid is not balanced, and reactive power may be exported from the wind farm in order to increase grid voltage. The amount of reactive power to be exported may be an amount which neutralizes or compensates the grid i.e. removes any imbalance, and/or aids the grid to achieve the reference value.

On the contrary, if the measured grid voltage at the common connection point is higher than the reference parameter value, then reactive power may be imported from the grid to the wind farm thereby lowering grid voltage. The amount of reactive power to be imported may be any amount which neutralizes the grid and/or aids the grid to achieve the reference value.

In other examples, the grid parameter to be measured may be the power factor of the wind farm i.e. the power being exchanged which may be a contribution from the plurality of wind turbines and the synchronous condenser. If the measured power factor is different from the reference parameter value e.g. a power factor reference given by the grid operator, then the power factor may be adjusted e.g. increased or lowered, in order to comply the reference value.

In alternative examples, the reference parameter value may be given by the grid operator. In such examples, the wind farm e.g. the central controller of the wind farm, may then measure a parameter at the common coupling point and adjust the wind farm to achieve the reference parameter. In an example the grid operator may require a certain power factor, therefore, the power factor may be measured at the common coupling point and, in the event the measured power factor is lower than the reference value, the reactive power of the wind farm (and of each of the synchronous condenser and the wind farm) may be adjusted to achieve the given reference value. In some examples it may require increasing the reactive power to be exchanged and in other examples, it may require reducing the reactive power to be exchanged.

In an example, determining the total reactive power to be exchanged may comprise determining the amount and the flow direction of the total reactive power.

In an example, exchanging the total reactive power with the grid may comprise exporting reactive power to the grid or importing reactive power from the grid. The grid may therefore be compensated which improves grid performance and also enables the wind farm to comply with grid code requirements.

In another example, exchanging the total reactive power may comprise exchanging a percentage of aggregate WT-reactive power equal to zero. Thus, the wind turbines may not need to be dimensioned for having a great reactive power exchange capability i.e. to be able to exchange large amount of reactive power. Therefore, the size of the inverter (or the converter), the size of the transformer (among other elements) of the wind turbines may not need to be oversized which enables a cost saving. In addition, the amount of material required for manufacturing the cabling system of the wind farm may also be significantly reduced as the number of wind turbines connected to each feeder cable may be increased.

In another example, exchanging the total reactive power may comprise exchanging a percentage of aggregate WT-reactive power of less than about 25% of the total required reactive power. Therefore, the size of the inverter (or the converter), of the transformer, etc. of the wind turbines may not need to be oversized or at least they may not need to be that much oversized (if compared with a find farm lacking a synchronous condenser). The manufacturing costs may therefore be reduced.

The lower the reactive power to be exchanged by the plurality of wind turbines, the higher the cost saving, as the oversizing of certain elements of the wind turbines is lower. That is, the dimensioning of the wind turbines for exchanging high amount of reactive power comprises higher over dimensioning than in cases wherein a lower amount of reactive power is to be exchanged.

In addition, the amount of material required for manufacturing the cabling system of the wind farm may also be significantly reduced as the number of wind turbines connected to each feeder cable may be increased

In another example, exchanging the total reactive power may comprise exchanging a percentage of aggregate WT-reactive power being equal to or higher than about 25% of the required reactive power and less than about 50% of the required reactive power.

In a further aspect, a computer program product is provided. The computer program product comprises instructions to cause the central controller of a wind turbine farm according to any of the disclosed examples, to execute the method according to any of the disclosed examples.

### Brief Description of Drawings

Embodiments of the invention will be described in the figures, wherein:
- Figure 1: schematically illustrates a wind turbine according to an example;
- Figure 2: schematically illustrates a wind farm according to an example;
- Figures 3A - 3C: illustrate the behaviour of reactive power and power factor of different circuits, according to an example;
- Figure 4: illustrates power diagrams at different locations of a wind turbine farm and grid, according to an example;
- Figures 5A - 5C: illustrate the total reactive power to be exchanged with the grid according to examples; and
- Figure 6: illustrates a flow diagram of a method to operate a wind turbine farm according to an example.

### Detailed description

The term "total reactive power" shall be understood as the amount of reactive power necessary to be exchanged with the grid in order to neutralize the grid or to comply with the requirements set by the grid operator.
The term "total reactive power value" shall be understood as the amount of reactive power calculated internally by the wind farm before being exchanged, it may comprise the flow direction, amount and the percentage to be exchanged by the synchronous condenser and the plurality of wind turbines.

The term "(to) neutralize the grid" shall be understood as compensating or counter-balancing the grid for reducing or removing the excess or insufficiency of a grid parameter.

The term "aggregate WT-reactive power" shall be understood as the reactive power of the plurality of wind turbines exchanged with the grid, the contribution all of the wind turbines of the plurality of wind turbines.

The term "SC-reactive power" shall be understood as the reactive power of the synchronous condenser exchanged with the grid.

The term "(to) export reactive power" shall be understood as extracting reactive power from the grid by the wind turbine farm.

The term "(to) import reactive power" shall be understood as injecting reactive power from the wind farm to the grid. The term "the percentage of SC-reactive power" may be the percentage of total reactive power to be exchanged by the wind farm which is exchanged by the synchronous condenser.

The term "the percentage of WT-reactive power" may be the percentage of total reactive power to be exchanged by the wind farm which is exchanged by the plurality of wind turbines.

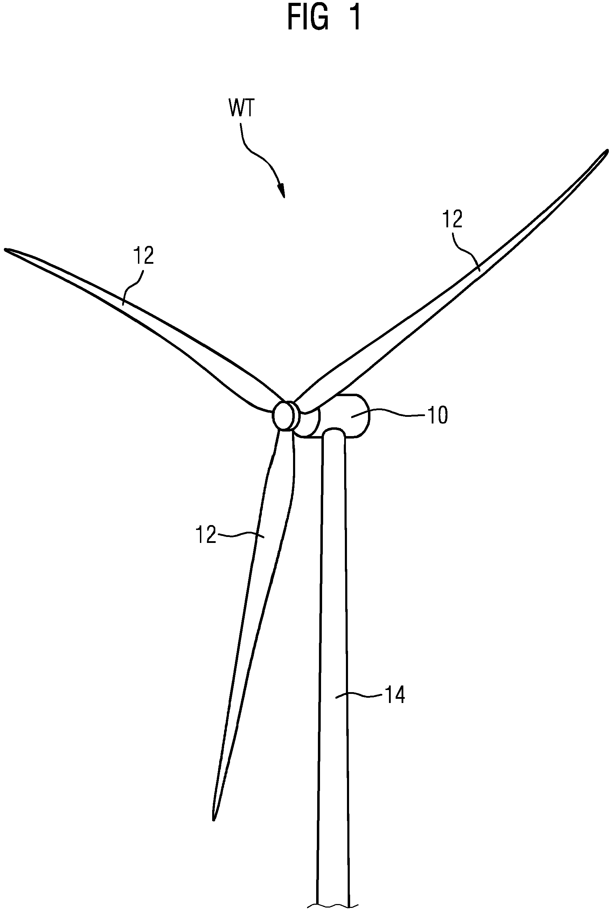

Figure 1 illustrates an exemplary wind turbine WT according to an example.

The wind turbine WT of Figure 1 may comprise a nacelle 10 housing a power generator (not shown). The nacelle 10 may be mounted on a tower 14. Figure 1 discloses a portion of the tower 14. The tower 14 may have any height that facilitates the operation of a wind turbine WT according to any of the examples herein disclosed, and may depend e.g. on the specific site requirements.

The wind turbine WT may also comprise a rotor hub connected to a plurality, e.g. three, blades 12 extending radially outwardly from the hub for converting the wind energy into rotational energy. The wind turbine WT may have any other number of blades 12 that facilitates operation of the wind turbine WT. The blades may have any length and/or shape.

The power generator may be coupled to a power converter (not shown), or to a power converter system, that may convert a substantially Direct Current (DC) power output from the power generator to Alternating Current (AC) power. The AC power may be transmitted or injected into an electrical distribution network, i.e. a grid.

In examples comprising a power converter system, the power system may comprise solar panels coupled to form one or more solar arrays. In an example, the power system may comprise s a plurality of solar panels and/or solar arrays coupled together in a series and/or parallel to facilitate generating a desired current and/or voltage output. Each solar panel may comprise one or more photovoltaic panel(s), a solar thermal collector or any other device that converts solar energy to electrical energy e.g. substantially direct current. The solar panel(s) may be coupled to the power converter.

The power converter may be configured to adjust the amplitude of the voltage and/or current of the converted AC power to an amplitude suitable for the grid. The power converter may be configured to provide AC power at a frequency and a phase that are substantially equal to the grid frequency and phase.

In an example, the power converter may provide three phase AC power. However, the power converter may provide single phase AC power or any other number of phases of AC power.

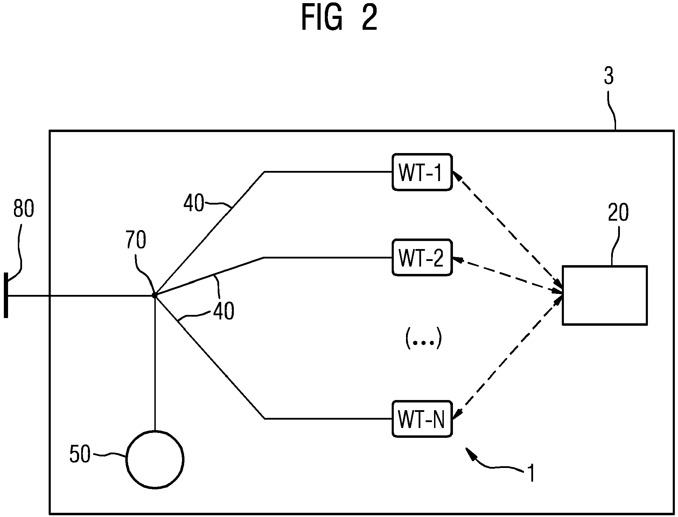

The wind turbine WT according to any of the disclosed examples may be configured to operate in a wind turbine farm 30 (see Figure 2).

Figure 2 shows an example of a wind farm 30 configured to exchange reactive power with the grid.

The wind farm 30 may comprise a plurality of wind turbines 1 according to any of the disclosed examples. Herein, WT is used together with a numeral 1,2, ..., N indicating that a wind turbine farm may comprise a plurality, i.e. N, wind turbines WT. Each of the plurality of wind turbines WT-1, ..., WT-N may be connected to a common connection point 70.

The common connection point 70 may be coupled to the grid 80. The plurality of wind turbines may be configured to exchange aggregate WT-reactive power with the grid. That is, the plurality of wind turbines may, depending on the on-going grid condition, import or export an amount of reactive power in order to compensate the grid. In an example, the plurality of wind turbines may be configured to exchange an amount of apparent power i.e. the vectorial sum of active and reactive power, to the grid.

The WT-reactive power may depend on the configuration of the wind turbines. The wind turbines may be dimensioned for exchanging a certain reactive power with the grid. The higher the amount of reactive power to be exchange the higher the over dimension of certain elements of the wind turbines is.

For example, if the reactive power demand required by the aggregate wind turbines, i.e. the reactive power to be exchanged by the plurality of wind turbines, is 50% of the rated active power then, the apparent current from the aggregate wind turbines and from each of the wind turbines may increase as the vectorial sum of the active and reactive current, i.e. a factor of 1.12. This means that certain wind turbines and/or wind farm components, e.g. the wind turbine frequency converter, the wind turbine transformer and/or the wind farm array cable system; need to be dimensioned for 12% higher current.

In an example, each wind turbine of the plurality of wind turbines may also comprise a wind turbine circuit breaker (not shown) for selectively connecting/disconnecting the wind turbine from the common coupling point 70.

The wind turbine farm 30 may further comprise a synchronous condenser 50. The synchronous condenser 50 may be (indirectly) connected to the common connection point 70, and thus to the grid 80.

A synchronous condenser is a device that comprises a shaft that spins freely, i.e. a spinning machine comprising a certain inherent inertia. The synchronous condenser 50 may be configured to exchange SC-reactive power with the grid. That is, the synchronous condenser 50 may, depending on the on-going grid condition, import or export an amount of reactive power in order to compensate the grid. In an example, the synchronous condenser 50 may be configured to exchange an amount of apparent power i.e. the vectorial sum of active and reactive power, to the grid.

The kinetic energy stored in the rotating mass of the rotor provides or absorbs active power during frequency deviations on the grid. The active power depends on the rate of change of frequency and on the inertia constant H of the SC rotor. The synchronous condenser may also be configured to mainly provide reactive power when a grid fault occurs.

The synchronous condenser 50 may have a predetermined reactive power exchange capability which may depend e.g. on the active power rating of the wind farm. In an example, the synchronous condenser 50 may have predetermined reactive power exchange capability of about 33% of the active power rating of the wind farm.

In an example, the synchronous condenser 50 may comprise an extra mass e.g. a flywheel to its rotating shaft. A flywheel is a mechanical device that adds moment of inertia, J [kgm²] to the synchronous condenser rotor. During operation with flywheel additional rotational energy is stored in the synchronous condenser rotor for enhanced frequency support.

The flywheel may be arranged on the synchronous condenser shaft wherein it may freely revolve. The flywheel may be made of e.g. metal, composite- or fibre material. In an example, the flywheel may be configured to rotate at the revolution rate of the synchronous speed when directly connected to the shaft, or at a higher revolution speed if the synchronous condenser comprises a gearbox between the shaft and the flywheel.

In an example, the synchronous condenser 50 may be a synchronous condenser system (not shown). The synchronous condenser system may comprise a plurality of synchronous condensers arranged in parallel.

In an example, the synchronous condenser may comprise a synchronous condenser circuit breaker 43. The synchronous condenser circuit breaker 43 may be configured to selectively open/close thereby disconnecting/connecting the synchronous condenser 50 from the grid 80.

The wind farm 30 may comprise an internal cabling system 40 connecting the plurality of wind turbines 1 to the grid 80 through the common connection point 70. Although a single cable is shown, both the wind farm and the grid may be configured to operate at any number of AC power phases. In an example, the wind farm and the grid are three phase systems. In another example, the wind farm and the grid are single phase systems.

The wind farm 30 may further comprise at least a controller e.g. a central controller 20. The central controller 20 may be connected (see the doted lines) to each of the plurality of wind turbines 1 with wired or wireless connection, and also to the synchronous condenser 50. The central controller 20 may be configured to manage the operation of the wind farm 3 by sending control signals to each of the plurality of wind turbines 1 and to the synchronous condenser 50. Additionally, the central controller 20 may be configured to manage the operation of the wind turbine circuit breakers and of the synchronous condenser circuit breaker. The central controller may send instructions, e.g. signals, to control the operation of the wind farm.

In an example, the central controller 20 may be a computerized controller. The central controller 20 may comprise a memory unit (not shown).

The wind farm 30 may also comprise a measuring device (not shown) configured to measure parameters e.g. at the common connection point (70). The measuring device may be connected to the central controller. The measuring device may be configured to measure either wind farm parameter or grid parameter. The measuring device may be configured to measure voltage, current, active power, reactive power, frequency, etc.

The wind turbine farm 30 may be an offshore or an onshore wind farm.

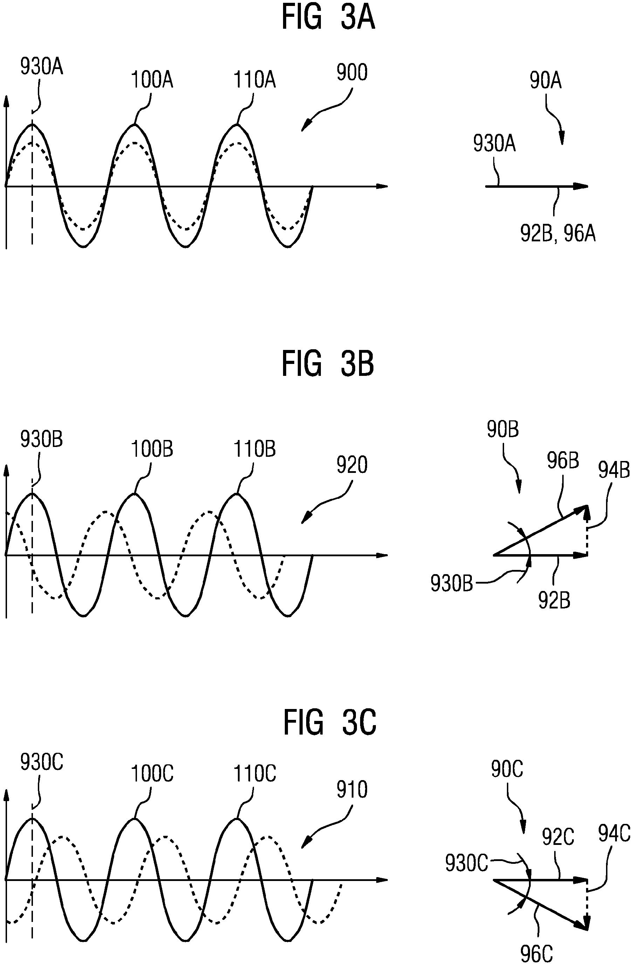

Figures 3A - 3C illustrate the reactive power 94A - 94C and the power factor of different exemplary circuits. The power factor is the ratio of the real power absorbed by the load to the apparent power flowing in the circuit.

Figure 3A depicts a simplified graph of an exemplary a resistive circuit 900 wherein a current 110A is in phase with a voltage 100A, thus the phase angle difference 930A is zero.

Figure 3A also shows a power vector diagram (on the right) which discloses the power 90A of the circuit. Since the phase angle difference 930A is zero, the active power 92A and the apparent power 96A are identical. Thus, the reactive power is zero. The power factor of the circuit is therefore 1. The resistive circuit 900 does not comprise an excess of voltage and/or of reactive power, and thus, it may be considered to be compensated.

Figure 3B depicts a simplified graph of an exemplary capacitive circuit 920 wherein a current phase 110B is lagging a voltage phase 100B. Thus, there is phase angle difference 930B between current 110B and voltage 100B.

Figure 3B also depicts a power vector diagram (on the right) disclosing the power 90B of the circuit. The power 90B comprises an apparent power 96B which is *V·I,* an active power 92B being *V·I*·*cos*(Θ) and an reactive power 94B is *V·I*·*sin*(Θ), wherein Θ is the phase angle difference 930B. Therefore, the power factor of the circuit is *cos*(Θ).

The capacitive circuit 920 comprises an excess of voltage and/or of reactive power, therefore it may be considered to be unbalanced. In order to compensate a capacitive circuit, the voltage may be decreased and/or reactive power imported by a compensating unit (not shown) in an amount having the same value but opposite sign of the circuits reactive power 94B to achieve the behaviour of a resistive circuit.

Figure 3C depicts a simplified graph of an exemplary an inductive circuit 910 wherein a current phase 110C is leading a voltage phase 100C, thus there is a phase angle difference 930C between current 110C and voltage 100C.

Figure 3C also shows a power vector diagram (on the right) which discloses the power 90C of the circuit. The power 90C comprises an apparent power 96C which is *V·I,* an active power 92C being *V*·*I*·*cos*(Θ) and an reactive power 94C being *V·I· sin*(Θ), wherein Θ is the phase angle difference 930C. Thus, the power factor of the circuit is *cos*(Θ). The inductive circuit 910 therefore comprises an insufficient voltage and/or reactive power, and thus, it may be considered to be unbalanced. In order to compensate an inductive circuit, the voltage should be increased and/or reactive power may be exported by a compensating unit (not shown) in an amount having the same value but opposite sign of the circuits reactive power 94C i.e. until the circuit behaves as a resistive circuit.

Herein, the compensating unit may be the wind farm. The wind farm may adapt or the reactive power exchange in order to compensate the grid, i.e. to achieve that the grid behaves as a resistive circuit.

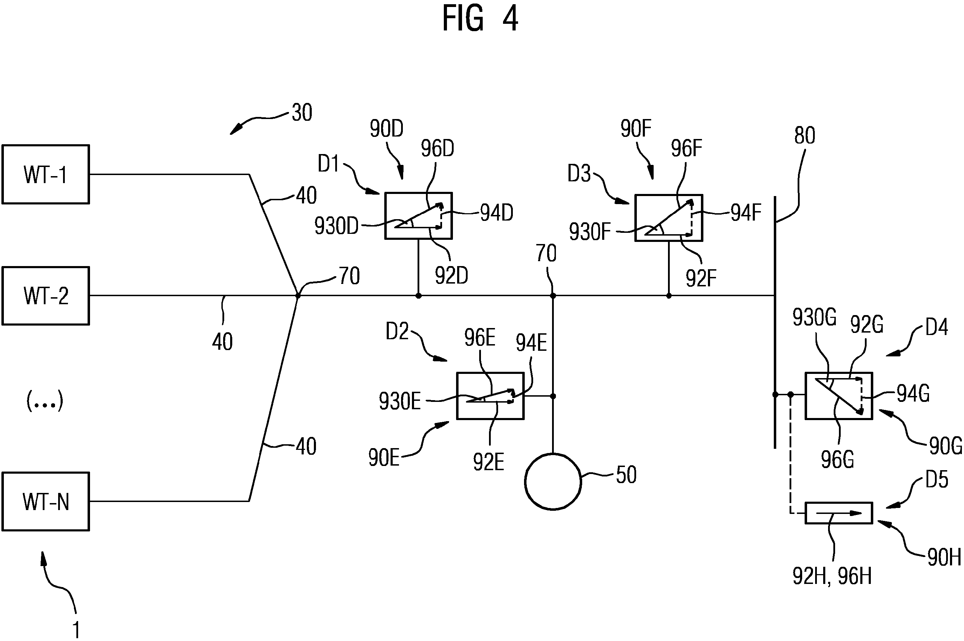

Figure 4 illustrates operational aspects of reactive power 94 at different locations of a wind farm 30 according to any of the disclosed examples, and also at the grid 80. For simplicity, the reactive power 94 is disclosed for a single phase from the wind turbines 1 to the grid 80.

Figure 4 shows power vector diagrams D1 - D3 at different points of the wind turbine farm and power vector diagrams D4 and D5 of the grid, according to an example.

The power vector diagram D1 is the power vector of the plurality of wind turbines 1. The power vector diagram D1 may be measured at any point between the plurality of wind turbines 1 and the common connection point 70. The power vector diagram illustrates the power 90D of the plurality of wind turbines being an apparent power 96D comprising a positive active power 92D and a positive reactive power 94D (see the doted arrow) having a phase angle 930D. The reactive power 94D may be denoted aggregate WT-reactive power.

As shown by the power vector diagram D1, that the plurality of wind turbines 1 may have a behaviour similar to a capacitive circuit (see Figure 3B) in the example of Figure 4.

The power vector diagram D2 is the power vector of the synchronous condenser 50. The power vector D2 may be measured at any point between the synchronous condenser 50 and the common connection point 70.

The power vector diagram illustrates the power 90E of the synchronous condenser 50being an apparent power 96E comprising a positive active power 92E and a positive reactive power 94E (see the doted arrow) having a phase angle 930E. The reactive power 94E may also denoted SC-reactive power 54.

The power vector diagram D2 shows that the synchronous condenser 50 may behave as a capacitive circuit (see Figure 3B) .

Figure 4 also depicts an accumulated power vector diagram D3. The accumulated power vector diagram comprises the contribution of the plurality of wind turbines 1 and also of the synchronous condenser 50.

The power vector diagram illustrates the aggregated power of the wind farm and the SC 90F being an aggregated apparent power 96F comprising a positive aggregated active power 92F and a positive aggregated reactive power 94F (see the doted arrow) having a phase angle 930F.

Power vector diagram D4 is the power vector diagram of the grid 80. The power vector diagram D4 may be measured at any point between the grid and the common connection point 70 e.g. usually this information may be given by the grid operator. The power vector diagram D4 illustrates the power 90G of the grid being an apparent power 96G comprising a positive active power 92G and a negative reactive power 94G (see the doted arrow) having a phase angle 930G.

The power vector diagram D4 shows that the grid 80 behaves as an inductive circuit (see Figure 3C), e.g. as a consequence of a voltage decrease. In the example of Figure 4, the grid is unbalanced due to a voltage decrease and/or an insufficient reactive power.

Thus, and in order to compensate the grid, the voltage is to be increased and/or reactive power be exported to the grid.

In the example, the accumulated power vector diagram D3 has an accumulated reactive power 94F with same value but opposite sign of the reactive power 94G of the grid 80, therefore when the accumulated power is exported to the grid, the grid may be compensated.

After exporting the accumulated power into the grid, the grid may be compensated i.e. it may behave as or very similar to a resistive circuit (see Figure 3A) as shown by power vector diagram D5 (in dotted lines). The exported accumulated capacitive power may increase the grid voltage thereby counter balancing it.

In an alternative example (not shown), if the grid behaves as a capacitive circuit i.e. its voltage needs to be decreased in order to compensate the grid, reactive power needs to be imported to the wind turbine farm. The plurality of wind turbines and the synchronous condenser may thus behave as inductive circuits.

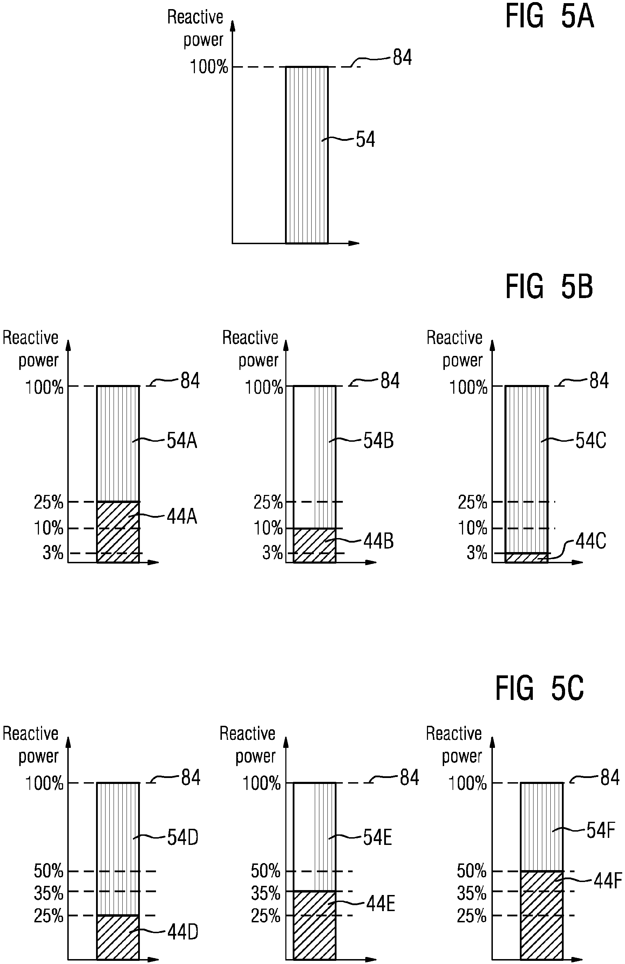

Figures 5A - 5C illustrate different configurations of the reactive power exchanged by a wind turbine farm according to any of the disclosed examples, wherein the total reactive power 84 to be exchanged comprises a percentage of SC-reactive power 54, 54A - 54F and a percentage of WT-reactive power 44, 44A - 44F.

The percentage of reactive power to be exchanged by each reactive power source i.e. the synchronous condenser 50 and the plurality of wind turbines 1, may vary according to: the total reactive power to be exchanged, i.e. the required amount to compensate the grid, and the predetermined capacity of the synchronous condenser. The percentage of SC-reactive power may be as high as possible e.g. depending on the predetermined reactive power capability of the synchronous condenser, and the remaining percentage up to the total reactive power, may therefore be WT-reactive power.

In other words, in the event the reactive power capacity, i.e. the amount of reactive power exchanged by synchronous condenser, is not enough to achieve the total reactive power to be exchanged with the grid (the 100% of it), the remaining percentage of the total reactive power may be exchanged by the plurality of wind turbines.

In an example, the percentage of SC-reactive power may be about 75% - 100% and the percentage of WT-reactive power may thus be about 0% - 25%. In another example, the percentage of SC-reactive power may be about 50% - 80% and the percentage of WT-reactive power may thus be about 20% - 50%.

As a result, the plurality of wind turbines may not need to be dimensioned to exchange high amounts of reactive power because the exchanged amount may be shared between the synchronous condenser. The manufacturing costs of the plurality of wind turbines may be reduced as some elements of the wind turbines such as cables, the inverter and/or the converter may not need to be oversized or at least the oversize of the elements may be less than in wind farms lacking a synchronous condenser.

The less reactive power exchange the plurality of wind turbines are configured to exchange, the lower manufacturing cost is, i.e. the oversizing of some wind turbines parts or elements e.g. the converter, the cables, etc., may be reduced.

Figure 5A discloses an example wherein all the reactive power is to be exchanged by the synchronous condenser 50, that is the percentage of SC-reactive power is 100% of the total required reactive power 84. And thus, the percentage of aggregate WT-reactive power is zero, i.e. no reactive power may be exchanged by the plurality of the wind turbines.

Figure 5B discloses three examples wherein the total required reactive power 84B to be exchanged may comprise a percentage of SC-reactive power 54A - 54C which may be about 75% - 97%, and a percentage of aggregate WT-reactive power 44A - 44C which may be about 3% - 25%.

In a first example, the percentage of the SC-reactive power 54A may be about 75% of the total required reactive power 84. Therefore, the percentage of WT-reactive power 44A may be about 25% of the total required reactive power.

In a second example, the percentage of SC-reactive power 54B may be about 90% of the total required reactive power 84. Therefore, the percentage of WT-reactive power 44B may be about 10% of the total required reactive power.

In a third example, the percentage of SC-reactive power 54C may be about 97% of the total required reactive power 84. Therefore, the percentage of WT-reactive power 44C may be about 3% of the total required reactive power.

Figure 5C discloses three examples wherein the total required reactive power 84B to be exchanged may comprise a percentage of SC-reactive power 54D - 54F which may be about 50% - 75%, and a percentage of aggregate WT-reactive power 44D - 44F which may be about 25% - 50%.

In a first example, the percentage of SC-reactive power 54D may be about 50% of the total required reactive power 84. Therefore, the percentage of WT-reactive power 44D may be about 50% of the total required reactive power.

In a second example, the percentage of SC-reactive power 54E may be about 65%. Therefore, the percentage of WT-reactive power 44E may be about 35% of the total required reactive power.

In a third example, the percentage of SC-reactive power 54F may be about 75% of the total required reactive power 84. Therefore, the percentage of WT-reactive power 44F may be about 25% of the total required reactive power.

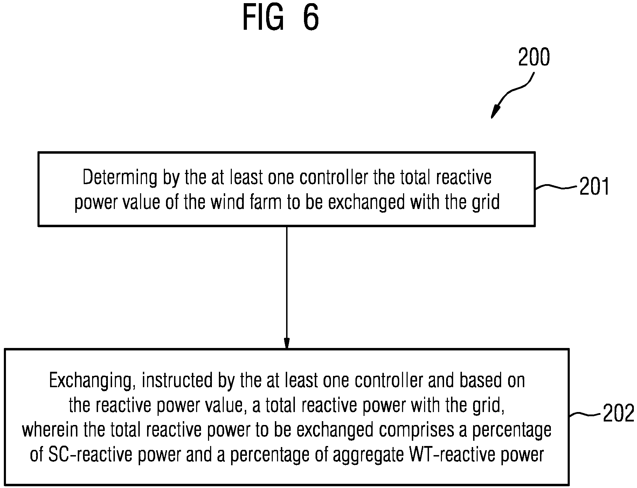

Figure 6 illustrates a flow chart of a method 2000 for operating a wind turbine farm according to any of the disclosed examples.

Firstly, a controller of the wind farm, e.g. the central controller; may, in block 201, determine the total reactive power value of the wind farm to be exchanged with the grid.

In an example, a parameter may be measured at a common connection point. The measured parameter may be either a grid parameter e.g. grid voltage, or a wind farm parameter e.g. the power factor.

The measured parameter may be compared e.g. by the central controller, with a reference parameter value. The reference parameter value may be a reference given by the grid operator or may be a value stored at a memory storage device of the central controller. In the event the measured parameter and the reference value are equal, no further adjustments may be needed i.e. the wind farm may continue operating unaltered. Otherwise, i.e. if the measured parameter is different from the reference value, the amount and the flow direction, i.e. import or export, of the total reactive power value may be determined in order to adjust the reactive power exchange of the wind turbine farm.

Determining the total reactive power value may also comprise determining e.g. at the central controller, the percentage of total reactive power to be shared by the synchronous condenser and by the plurality of wind turbines.

The wind farm may, in block, 202, exchange a total reactive power with the grid e.g. after being instructed by a controller e.g. a central controller of the wind farm. The total reactive power may be based on the determined reactive power value and may comprise a percentage of SC-reactive power and a percentage of aggregate WT-reactive power.

Exchanging a total reactive power may comprise exporting or importing reactive power. In an example, the total reactive power may be exported to the grid e.g. in cases wherein the grid voltage is below a reference value. In other examples, the total reactive power may be imported from the grid e.g. in the event the voltage of the grid needs to be lowered.

In some examples, the total reactive power exchanged may comprises a percentage of aggregate WT-reactive power equal to zero. That is, all the reactive power, i.e. the 100% of the total reactive power, exchanged by the wind farm may be exchanged by the synchronous condenser.

However, the synchronous condenser may have a predetermined reactive power capability, i.e. a maximum reactive power to be exchanged, which may in some examples not be enough to achieve the total reactive power. In examples wherein the total reactive power is higher than the maximum amount the synchronous condenser, the remaining percentage up to the total reactive power, may be exchanged by the plurality of the wind turbines.

That is, in some examples, the total reactive power exchanged may comprises a non-zero percentage of aggregate WT-reactive power. In an example, the percentage of aggregate WT-reactive power may be less than about 25% of the total required reactive power. In an example, the percentage of aggregate WT-reactive power may be about 25% - 50% of the total required reactive power.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A wind turbine farm (30) for exchanging a total reactive power with the grid, the wind farm comprising:
a plurality of wind turbines (1) configured to exchange aggregate WT-reactive power (44) with the grid, the plurality of wind turbines being connected to a common connection point (70), the common connection point (70) being coupled to the grid (80);
a synchronous condenser (50) configured to exchange SC-reactive power (54) with the grid, the synchronous condenser (50) being connected to the common connection point (70); and
a central controller configured to control the operation of the plurality of wind turbines (1) and of the synchronous condenser (50),
wherein the total reactive power to be exchanged comprises a percentage of SC-reactive power and a percentage of aggregate WT-reactive power.

2. The wind turbine farm according to claim 1, wherein the percentage of aggregate WT-reactive power to be exchanged is zero.

3. The wind turbine farm according to claim 1, wherein the percentage of aggregate WT-reactive power to be exchanged is non-zero.

4. The wind turbine farm (30) according to any of claims 1 - 3, further comprising a measuring device configured to measure parameters at the common connection (70) point.

5. The wind turbine farm (30) according to claim 4, wherein the parameters are voltage, active power, reactive power, frequency among others.

6. The wind turbine farm (30) according to claim 4 or 5, wherein the total reactive power to be exchanged depends on a measured parameter.

7. The wind turbine farm (30) according to any of claims 1 - 6, wherein the synchronous condenser comprises a flywheel.

8. A method (200) to operate a wind turbine farm, the wind farm comprising:
a plurality of wind turbines (1) configured to exchange aggregate WT-reactive power (44) with the grid, the plurality of wind turbines being connected to a common connection point (70), the common connection point (70) being coupled to the grid (80);
a synchronous condenser (50) configured to exchange SC-reactive power (54) with the grid, the synchronous condenser (50) being connected to the common connection point (70); and
at least one controller configured to control the operation of the plurality of wind turbines and of the synchronous condenser (50);
wherein the total reactive power to be exchanged comprises a percentage of SC-reactive power and a percentage of aggregate WT-reactive power,
the method comprising:
determining (201) by the at least one controller the total reactive power value of the wind farm to be exchanged with the grid;
exchanging (202) with the grid, instructed by the at least one controller and based on the reactive power value, a total reactive power; wherein
the total reactive power comprises a percentage of SC-reactive power and a percentage of aggregate WT-reactive power.

9. The method (200) according to claim 8, further comprising:
measuring a parameter at the common connection point; and
comparing the measured parameter with a reference parameter value.

10. The method according to claim 8 or 9, wherein determining (203) the total reactive power value comprises determining the amount and the flow direction of the total reactive power.

11. The method according to any of claims 8 - 10, wherein exchanging (204) the total reactive power with the grid, comprises exporting reactive power to the grid or importing reactive power from the grid.

12. The method according to any of claims 8 - 11, wherein exchanging (204) the total reactive power comprises exchanging a percentage of aggregate WT-reactive power equal to zero.

13. The method according to any of claims 8 - 12, wherein exchanging (204) the total reactive power comprises exchanging a percentage of aggregate WT-reactive power of less than about 25% of the total required reactive power.

14. The method according to any of claims 8 - 12, wherein exchanging (204) the total reactive power comprises exchanging a percentage of aggregate WT-reactive power being equal to or higher than about 25% of the required reactive power and less than about 50% of the required reactive power.

15. A computer program product comprising instructions to cause the central controller of the wind turbine farm of any of claims 1 -7 to execute the method according to any of claims 8 - 14.
